# EUROPÄISCHE PATENTSCHRIFT

(11) **EP 1 233 216 B1**
(45) Veröffentlichungstag und Bekanntmachung des Hinweises auf die Patenterteilung: **02.03.2005**
(21) Anmeldenummer: 01130786.5
(22) Anmeldetag: 22.12.2001
(51) Int. Cl.: F16K 1/22, F16K 1/226

(54) **Klappenscheibenventil**
Butterfly valve
Robinet à papillon

(30) Priorität: 19.01.2001 US 766508
(43) Veröffentlichungstag der Anmeldung: 21.08.2002
(73) Patentinhaber: Zwick GmbH, 58256 Ennepetal (DE)
(72) Erfinder: Zwick, Johann, 58256 Ennepetal (DE)
(74) Vertreter: Patentanwälte Dr. Solf & Zapf

(56) Entgegenhaltungen:
- DE-B- 1 179 049
- US-A- 2 835 268
- US-A- 4 759 530
- PATENT ABSTRACTS OF JAPAN vol. 2000, no. 05, 14. September 2000 (2000-09-14) & JP 2000 046200 A (TOMOE TECH RES CO), 18. Februar 2000 (2000-02-18)

## Beschreibung

Die vorliegende Erfindung betrifft ein Klappenscheibenventil für Medien unter Hochdruck und/oder Hochtemperatur, gemäß dem Oberbegriff des Patentanspruchs 1.

Derartige Ventile werden als Absperrorgane in Hochdrucksystemen, beispielsweise zwischen Rohrleitungen, Druckbehältern, Kesseln, Turbinen und/oder dergleichen, eingesetzt. Dabei sind üblicherweise eine umfängliche Dichtzone der Klappenscheibe und der umfangsgemäße gehäuseseitige Dichtsitz in Anpassung an die Schließ- bzw. Öffnungsbewegung der Klappenscheibe derart "konisch" ausgebildet, daß in der Absperrstellung im Falle einer Druckbeaufschlagung von der Seite her, auf der die Welle verläuft, die Klappenscheibe fest in den Dichtsitz gepreßt wird. Hierdurch wird auch bei einem sehr hohen Druck eine effektive Abdichtung gewährleistet, und gleichzeitig wird die Klappenscheibe auch mechanisch gegen den Druck abgestützt. In der Praxis sind solche Ventile aber in der Regel für beide Fließrichtungen ausgelegt, so daß oft auch der umgekehrte Belastungsfall auftritt, wobei die Klappenscheibe auf ihrer der Welle abgekehrten Seite mit einem Gegendruck beaufschlagt wird.

Bei früheren bekannten Ventilen hat sich im praktischen Einsatz gezeigt, daß es bei bestimmten Medien zu Funktionsstörungen dahingehend kommen kann, daß nach einer bestimmten Zeit die Klappenscheibe kaum noch oder sogar überhaupt nicht mehr betätigt werden kann.

Bei einem in dem Dokument DE-U- 298 22 791 beschriebenen Klappenscheibenventil ist deshalb vorgesehen, daß jedes der beiden gehäuseseitigen Drehlager in seinem dem Durchlaß zugekehrten, inneren Endbereich eine statisch verpresste Lagervorabdichtung zwischen der Welle und dem Gehäuse aufweist. Hierdurch soll vermieden werden, daß das unter Druck stehende jeweilige Medium vom Durchlaß in den Bereich der Drehlager, d.h. jeweils in einen Ringspalt zwischen der Welle und einer gehäuseseitigen Lagerbohrung, eindringen kann. Diese Maßnahme beruhte auf der Erkenntnis, daß gerade ein solches Eindringen bestimmter Medien in den Bereich der Drehlager die beschriebenen Probleme verursacht. Vor allem polymerisierende Medien (sogenannte "Crack-Medien"), wie z.B. Hydrokarbon und bestimmte Harze, können Ablagerungen insbesondere in Form von Kristallen verursachen und damit zu einem Festfressen der Welle in den Drehlagem führen. Dies soll durch die Lagervorabdichtung verhindert werden, indem die Medien gar nicht erst in den Bereich der Drehlager eindringen können. Es hat sich aber gezeigt, dass nach längeren Einsatzzeiten doch noch solche Probleme auftreten können, weil es durch die Materialeigenschaften der im Bereich der Lagervorabdichtungen eingesetzten Graphitdichtringe und/oder (Kohle-) Fasergeflechtringe nach längerem Einsatz unter Hochdruck und/oder Hochtemperatur zu Setzungserscheinungen derart kommen kann, daß eine dort vorgesehene, statische, über Verschraubungen einmal vorgegebene Dichtungsverpressung nachlassen kann. Bei dem bekannten Klappscheibenventil kann zwar grundsätzlich die dem Wellen-Betätigungsende nächstliegende Lagervorabdichtung über Verschraubungen nachgespannt werden. Allerdings erfordert dies einerseits Wartungsarbeiten, deren Notwendigkeit aber von außen gar nicht erkannt werden kann, und andererseits ist die andere Lagervorabdichtung ausschließlich statisch über einen Gehäusedeckel verspannt und daher auch durch eine Wartung überhaupt nicht nachspannbar. Daraus kann eine Undichtigkeit beider Lagervorabdichtungen, insbesondere aber der vom Wellen-Betätigungsende entfernt liegenden Lagervorabdichtung, resultieren, wodurch das jeweilige Medium doch wieder in den Drehlagerbereich eindringen und die eingangs beschriebenen Probleme verursachen kann.

Ein Klappenscheibenventil der gattungsgemäßen, dem Oberbegriff des Patentanspruchs 1 entsprechenden Art ist in dem Dokument US-A-2 835 268 beschrieben. Dabei sitzt jeweils ein verpressbarer Dichtring axial zwischen zwei Ring- bzw. Buchsenelementen und radial direkt zwischen der Welle und einer Lageröffnung des Gehäuses. Daraus können Probleme bei der Montage resultieren.

Entsprechendes gilt auch für weitere Ventile, wie sie aus der JP 2000 046 200, der US-A-4 758 530 bzw. der DE 1 179 049 bekannt sind.

Der vorliegenden Erfindung liegt die Aufgabe zugrunde, ein Klappenscheibenventil der gattungsgemäßen Art weitergehend so zu verbessern, daß einerseits auch nach längerer Einsatzzeit sowie auch bei Verwendung für beliebige Medien stets eine störungsfreie Funktion zum Öffnen und Schließen des Durchlasses gewährleistet und andererseits das Ventil auch mit konstruktiv einfacher Ausgestaltung einfach und schnell montiert werden kann.

Erfindungsgemäß wird dies durch die Merkmale des Patentanspruchs 1 erreicht. Vorteilhafte Ausgestaltungsmerkmale sind Gegenstand der abhängigen Ansprüche.

Zumindest die von dem Betätigungsende der Welle entfernt liegende Lagervorabdichtung ist über Spannmittel derart axial mit einer Nachspannkraft beaufschlagbar, dass eine nachstellende radiale Verpressbarkeit erreicht wird. Vorzugsweise ist auch die andere, dem Betätigungsende der Welle nächst liegende Lagervorabdichtung über Spannmittel zum Nachspannen beaufschlagbar. Hierbei ist es besonders vorteilhaft, die Spannmittel durch Federmittel derart zu bilden, dass die bzw. jede Lagervorabdichtung in axialer Richtung permanent mit Federkraft beaufschlagt ist, so dass eine dauerhafte selbstnachstellende radiale Verpressung erreicht wird.

Bevorzugt sind somit beide Lagervorabdichtungen wenigstens durch Wartungsarbeiten nachspannbar. In der bevorzugten Ausgestaltung, wobei als Spannmittel Federmittel vorgesehen sind, wird vorteilhafterweise eine automatische Selbstnachstellung der Dichtungsverpressung erreicht, indem die Federmittel die Lagervorabdichtungen stets mit nahezu konstanter Federkraft beaufschlagen und so dauerhaft verspannen. Dadurch wird ein praktisch wartungsfreies Klappenscheibenventil mit langer Gebrauchszeit geschaffen. Zusätzlich tritt der weitere Vorteil auf, daß durch die über lange Zeit hinweg aufrechterhaltene Lagervorabdichtung auch eine druckbedingte axiale Kraftbeaufschlagung der Welle vermieden wird, weil das Druckmedium von einem Raum ferngehalten wird, in dem das einem Betätigungsende gegenüberliegende Ende der Welle praktisch gekapselt angeordnet ist; dieser Raum bleibt durch die effektive, selbstnachstellende Lagervorabdichtung vorteilhafterweise druckfrei.

Gemäß der Erfindung ist vorgesehen, daß jede Lagervorabdichtung eine zweiteilige Lagerbuchse mit einer die Welle unmittelbar aufnehmenden Innenbuchse und einer die Innenbuchse aufnehmenden und in einer Lagerbohrung des Gehäuses sitzenden Außenbuchse aufweist. Hierbei ist im inneren, d.h. dem Durchlaß zugekehrten Endbereich des jeweiligen Drehlagers axial zwischen der Innenbuchse und einem vorspringenden, ringstegförmigen Endabschnitt der Außenbuchse ein verpreßbares Dichtelement derart angeordnet, daß durch das axiale Verpressen der Lagerbuchse - bzw. der Innenbuchse und der Außenbuchse relativ zueinander - durch die erfindungsgemäße Federkraft das Dichtelement auch radial dauerhaft nach innen gegen die Welle verpreßt wird. Diese bevorzugte Ausgestaltung stellt einen besonderen Vorteil hinsichtlich der Montage des Klappenscheibenventils dar. Die Welle kann zunächst problemlos in den - bevorzugt von den jeweils zweiteiligen Lagerbuchsen gebildeten - Drehlagem durch einfaches Einschieben montiert werden. Erst nach diesem Zusammensetzen werden dann die Lagervorabdichtungen durch axiales Verpressen der Lagerbuchsen durch die Federmittel verspannt.

Anhand eines bevorzugten, in der Zeichnung dargestellten Ausführungsbeispiels soll im folgenden die Erfindung näher erläutert werden. Dabei zeigen:
- Fig. 1: eine Vorderansicht eines erfindungsgemäßen Klappenscheibenventils in Absperrstellung auf die "Gegendruckseite",
- Fig. 2: einen Axialschnitt in der Schnittebene II-II gemäß Fig. 1, wobei hier eine herkömmliche, bekannte Ausführungsform veranschaulicht ist,
- Fig. 3: eine gesonderte und vergrößerte Darstellung der Klappenscheibe in Axialrichtung, d.h. in Pfeilrichtung III gemäß Fig. 1,
- Fig. 4: eine vereinfachte und vergrößerte Darstellung analog zu Fig. 2 in einer erfindungsgemäßen Ausführungsform,
- Fig. 5: eine Ausschnittvergrößerung des Bereichs des unteren Drehlagers aus Fig. 4,
- Fig. 6: eine vergrößerte Detailansicht des Bereichs VI in Fig. 3 und
- Fig. 7: eine gesonderte Darstellung eines Dichtungsringes der Klappenscheibe in Pfeilrichtung VII gemäß Fig. 3.

In den verschiedenen Figuren der Zeichnung sind gleiche Teile stets mit den gleichen Bezugszeichen versehen und werden daher in der Regel auch jeweils nur einmal beschrieben.

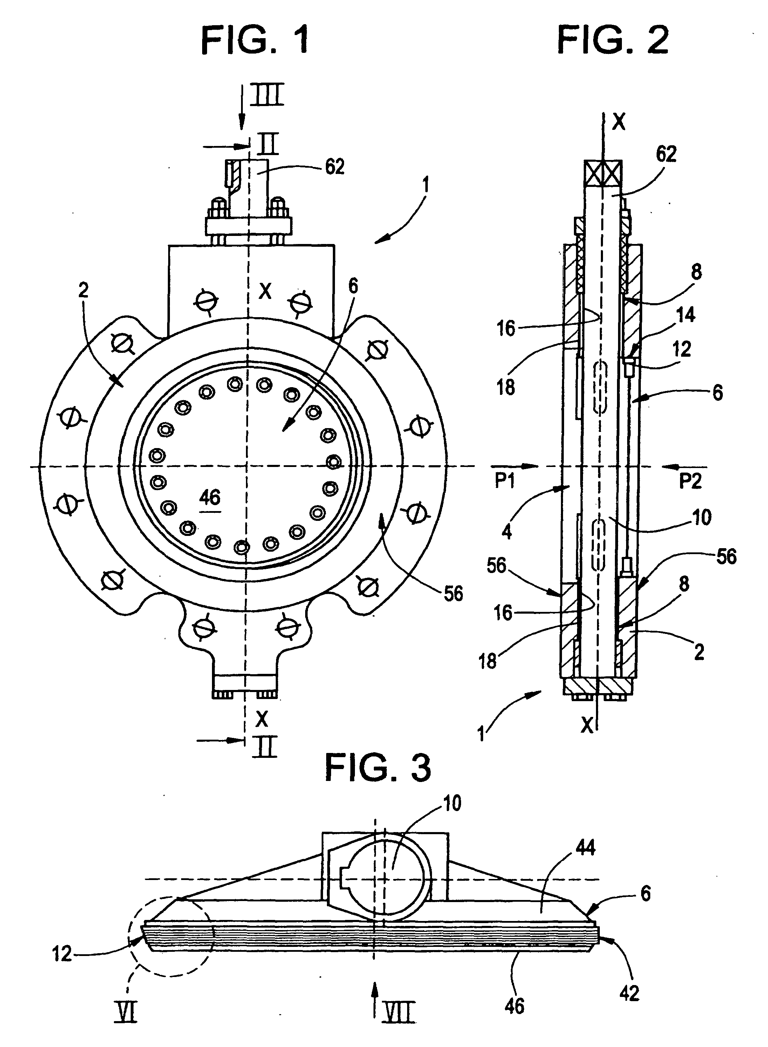

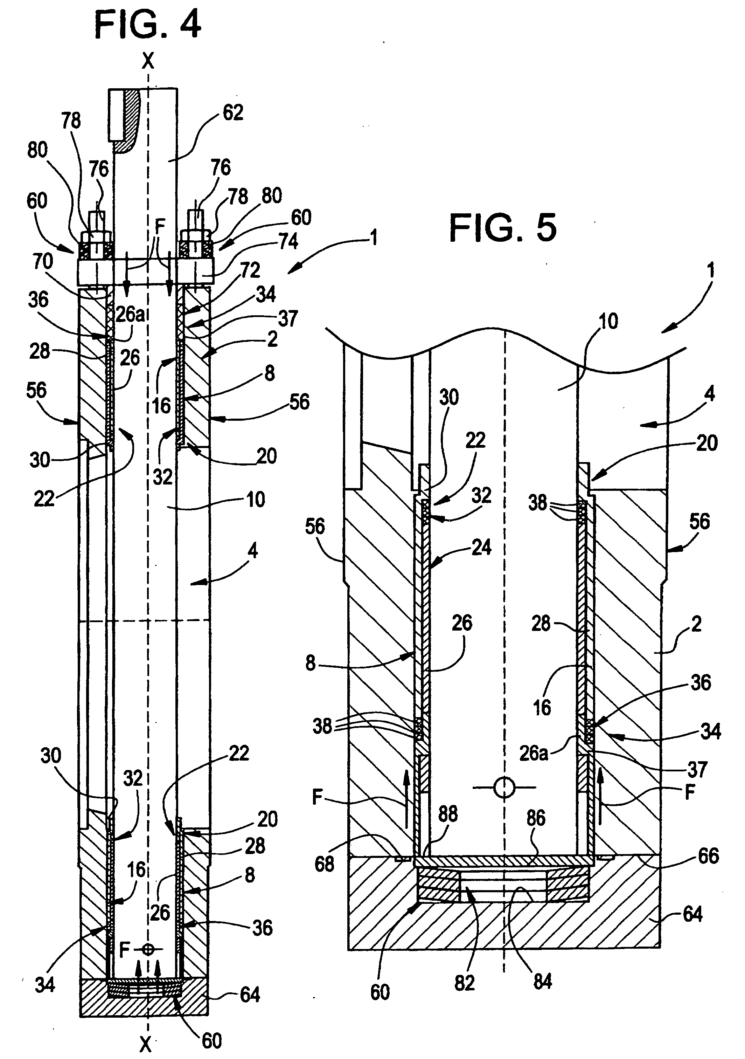

Ein erfindungsgemäßes Klappenscheibenventil 1 besteht aus einem Gehäuse 2 mit einem Durchlaß 4 (vgl. Fig. 2 und 4) für ein Medium sowie aus einer als Absperrorgan innerhalb des Durchlasses 4 angeordneten, im wesentlichen kreisförmigen Klappenscheibe 6. Diese Klappenscheibe 6 ist über eine auf einer Scheibenseite angeordnete, beidendig in gehäuseseitigen Drehlagem 8 geführte und sich quer durch den Durchlaß 4 erstreckende Welle 10 um eine bezüglich ihrer Kreisform im wesentlichen diametral verlaufende Drehachse X-X derart verdrehbar bzw. - zutreffender gesagt - verschwenkbar, daß sie in einer Öffnungsstellung (in der Zeichnung nicht dargestellt) mit ihrer Scheibenebene etwa entsprechend der Durchlaßrichtung bzw. etwa parallel dazu verläuft und in der in Fig. 1 und 2 dargestellten, quer zur Durchlaßrichtung stehenden Absperrstellung den Durchlaß 4 verschließend mit einer äußeren umfangsgemäßen Dichtzone 12 dichtend mit einem gehäuseseitigen umfangsgemäßen Dichtsitz 14 zusammenwirkt. Dies ist am besten in Fig. 2 zu erkennen.

Bei der in Fig. 2 veranschaulichten, herkömmlichen Ausführungsform ist erkennbar, daß im Bereich jedes Drehlagers 8 jeweils zwischen der Welle 10 und einer zugehörigen Lagerbohrung 16 ein Ringspalt 18 gebildet ist, in den ein unter Druck stehendes Medium aus dem Bereich des Durchlasses 4 eindringen und sich dort eventuell festsetzen könnte.

Um dies zu vermeiden, ist gemäß Fig. 4 und 5 vorgesehen, daß jedes der beiden Drehlager 8 auf seiner dem Durchlaß 4 zugekehrten, inneren Seite 20 eine verpreßbare Lagervorabdichtung 22 zwischen der Welle 10 und dem Gehäuse 2 aufweist. Zweckmäßigerweise besitzt hierzu jede Lagervorabdichtung 22 eine zweiteilige Lagerbuchse 24 mit einer die Welle 10 unmittelbar lagernd aufnehmenden Innenbuchse 26 und einer die Innenbuchse 26 aufnehmenden und in der jeweiligen Lagerbohrung 16 des Gehäuses 2 sitzenden Außenbuchse 28. Diese beiden Buchsen 26, 28 sitzen so ineinander, daß sie axial gegeneinander verschiebbar sind. Auf der jeweils inneren Seite 20 der Drehlager 8 ist axial zwischen der Innenbuchse 26 und einem vorspringenden, radial nach innen über das Stirnende der Innenbuchse 26 ragenden, ringstegförmigen Endabschnitt 30 der Außenbuchse 28 (siehe Fig. 5) ein verpreßbares Dichtelement 32 derart angeordnet, daß durch ein axiales Verpressen bzw. Verspannen der Lagerbuchse 24 -bzw. der Innen- und Außenbuchsen 26, 28 relativ zueinander - das Dichtelement 32 auch radial zwischen der Außenbuchse 28 und der Welle 10 verpreßt wird. Hierdurch wird der Ringspalt zwischen der Welle 10 und der Lagerbuchse 24 zur Seite des Durchlasses 4 hin abgedichtet, so daß ein Eindringen des jeweiligen Mediums in den die Welle 10 umgebenden Ringspalt verhindert wird.

Bevorzugt weist jedes Drehlager 8 auch auf seiner von dem Durchlaß 4 entfernt liegenden Seite 34 ein zweites, äußeres Dichtelement 36 derart auf, daß dieses zweite Dichtelement 36 durch das oben schon beschriebene axiale Verpressen der Lagerbuchse 24 auch radial nach außen gegen die Lagerbohrung 16 des Gehäuses 2 verpreßt wird. Dazu sitzt das Dichtelement 36 axial zwischen der Außenbuchse 28 und einem radial nach außen über das Stirnende der Außenbuchse 28 ragenden Abschnitt 37 der Innenbuchse 26 oder einer separaten Druckbuchse 26a.

Wie am besten in Fig. 5 erkennbar ist, ist zumindest das erste, innere Dichtelement 32 jeder Lagervorabdichtung 22 durch ein Dichtringpaket mit mindestens zwei verpressbaren Dichtringen 38 gebildet. Insbesondere die beiden inneren Dichtelemente 32 bestehen vorzugsweise aus einem dreiteiligen Dichtringpaket aus drei verpressbaren Dichtringen 38, bei denen es sich bevorzugt um vorgepresste Reingraphitringe handelt. Jedes äußere Dichtelement 36 besteht vorzugsweise aus einem gleichartigen Dichtringpaket aus drei Dichtringen 38.

Wie sich nun weiterhin insbesondere aus Fig. 2, 3, 6 und 7 ergibt, sind der gehäuseseitige Dichtsitz 14 und die Dichtzone 12 der Klappenscheibe 6 zumindest in einem Teilbereich ihres Umfanges in Anpassung an die Schließ-Schwenkbewegung der Klappenscheibe 6 derart "konisch" abgeschrägt ausgebildet, daß sich der freie Strömungsquerschnitt im Bereich des Dichtsitzes 14 insbesondere in die der Wellenseite der Klappenscheibe 6 gegenüberliegende Richtung geringfügig verringert. Hierdurch handelt es sich bei der Wellenseite der Klappenscheibe 6 um die "Druckseite", die mit einem Druck p₁ beaufschlagbar ist. Die gegenüberliegende, von der Welle 10 abgekehrte Seite der Klappenscheibe 6 ist die sogenannte "Gegendruckseite", die mit einem Druck p₂ beaufschlagbar ist. Bei Beaufschlagung mit Druck p₁ - bzw. wenn p₁ größer p₂ - wird die Klappenscheibe 6 in den Dichtsitz 14 gepreßt. Bei Beaufschlagung mit hohem Gegendruck p₂ (bzw. p₂ größer p₁) wird die Klappenscheibe 6 über die Welle 10 gegen Abheben von dem Dichtsitz 14 abgestützt.

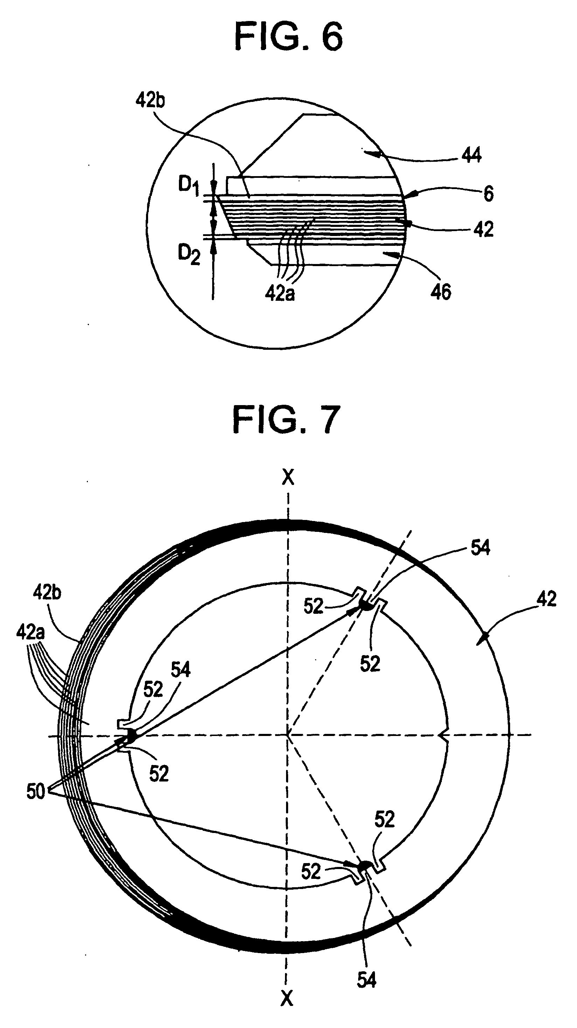

Die Dichtzone 12 der Klappenscheibe 6 ist von einem separaten Dichtungsring 42 gebildet, der gesondert in Fig. 7 dargestellt ist. Dieser Dichtungsring 42 ist zwischen einer Basisscheibe 44 der Klappenscheibe 6 und einem insbesondere scheibenförmigen, gegebenenfalls aber auch ringscheibenförmigen Klemmelement 46 eingespannt gehalten (s. hierzu Fig. 3 und 6). Hierbei ist nun bevorzugt vorgesehen, daß der Dichtungsring 42 als Lamellendichtung aus mehreren paketartig aufeinanderliegenden Einzelscheiben 42a, 42b aus Stahl (Edelstahl) besteht. Bezüglich der oben beschriebenen Druckverhältnisse ist es hierbei vorteilhaft, wenn die auf einer Seite, insbesondere der Druckseite p₁, angeordnete erste Einzelscheibe 42b der Lamellendichtung 42 eine Dicke D₁ aufweist, die größer als die Dicke D₂ der übrigen Einzelscheiben 42a ist - siehe hierzu Fig. 6. Beispielsweise beträgt die Dicke D₁ der ersten Scheibe 42b etwa 1 mm, während die Dicke D₂ aller übrigen Scheiben 42a z.B. etwa 0,5 mm beträgt.

Wie sich noch aus Fig. 7 ergibt, sind die Einzelscheiben 42a, b im inneren Umfangsbereich des Dichtungsrings 42 an vorzugsweise mindestens drei über den Ringumfang gleichmäßig verteilten Verbindungsstellen 50 stoffschlüssig miteinander verbunden, und zwar insbesondere verschweißt. Vorzugsweise sind hierzu jeweils durch beidseitige Einschnitte 52 etwa radial angeordnete Zungen 54 gebildet, wobei die Verschweißung nur im Bereich der Zungen 54 erfolgt, um thermisch bedingte Verformungen der Scheiben zu vermeiden.

In einer nicht dargestellten Ausführungsvariante können die Einzelscheiben 42a, b auch in ihrem Ringflächenbereich miteinander verstiftet bzw. vernietet sein.

In jedem Fall ist darauf zu achten, daß die beiden Ring-Stirnflächen plan bearbeitet sind, um sie zwischen Basisscheibe und Klemmelement 46 einspannen zu können.

Ergänzend sei noch erwähnt, daß das Gehäuse 2 im wesentlichen hohlzylindrisch bzw. aufgrund relativ kurzer Strömungslänge etwa ringscheibenförmig ausgebildet ist. Hierbei weist das Gehäuse 2 zwei stirnseitige, gegenüberliegende Dichtflächen 56 auf, die mit entsprechenden Gegendichtflächen von bestimmten, nicht dargestellten Drucksystemkomponenten, wie Rohrleitungen, Druckbehältern, Kesseln, Turbinen und dergleichen, verflanschbar sind.

In der dargestellten, bevorzugten Ausführung der Erfindung ist jede Lagervorabdichtung 22 durch Federmittel 60 derart in axialer Richtung permanent mit Federkraft F beaufschlagt, daß eine dauerhafte, selbstnachstellende radiale Verpressung erreicht wird.

Bei der dargestellten Ausführungsform ist die Welle 10 einseitig mit einem Betätigungsende 62 aus dem Gehäuse 2 nach außen geführt. Anderseitig endet die Welle 10 in einem über ein Deckelelement 64 dicht verschlossenen Gehäuseraum. Das Deckelelement 64 ist plan gegen eine Gehäusefläche 66 verschraubt, und zwar über beispielsweise vier in Fig. 4 und 5 nicht erkennbare Schraubelemente. Die Abdichtung erfolgt über einen Dichtring 68, der bevorzugt als sogenannte Spiraldeckeldichtung aus Graphit gebildet und in einer ringförmigen Vertiefung insbesondere des Deckelelementes 64 angeordnet ist.

Die dem Betätigungsende 62 der Welle 10 nächstliegende (obere) Lagervorabdichtung 22 wird über ein hülsenförmiges, die Welle 10 umschließendes und bereichsweise in das Gehäuse 2 eingreifendes Stopfbuchsenelement 70 mit der Federkraft F beaufschlagt. Vorzugsweise wirkt das Stopfbuchsenelement 70 gegen die Innenbuchse 26 der zweiteiligen Lagerbuchse 24, und zwar insbesondere über eine zusätzliche Dichtungspackung 72, die im Ringspalt unmittelbar zwischen der Welle 10 und der Lagerbohrung 16 sitzt, sowie bevorzugt über eine separate Druckbuchse 26 a. Dabei wird das Stopfbuchsenelement 70 von einem Druckkörper 74 beaufschlagt, der außerhalb des Gehäuses 2 auf mit dem Gehäuse 2 verbundenen, zur Welle 10 parallelen Stehbolzen 76 sitzt. Der Druckkörper 74 weist eine mittige Öffnung für die Welle 10 auf. Als Federmittel 60 sitzt auf jedem Stehbolzen 76 zwischen dem Druckkörper 74 und einem dem Gehäuse 2 gegenüberliegenden Widerlagerelement 78 mindestens ein Druckfederelement 80, welches zur Erzeugung der zum Vorspannen erforderlichen, relativ hohen Federkraft F insbesondere als ein aus mehreren Tellerfedern bestehendes Federpaket ausgebildet ist. Mit Vorteil können die Stehbolzen 76 als Schraubgewindebolzen und die Widerlagerelemente 78 als dazu passende Schraubmuttem ausgebildet sein. Hierdurch kann die Federvorspannung F voreingestellt werden. Zweckmäßigerweise sind vier Stehbolzen 76 mit entsprechenden Druckfederelementen 80 und Widerlagerelementen 78 in einer kraftsymmetrischen Verteilung um die Welle 10 herum vorgesehen.

Wie sich am besten aus der vergrößerten Darstellung in Fig. 5 entnehmen läßt, wird die andere, auf der verschlossenen Seite des Gehäuses 2 angeordnete Lagervorabdichtung 22 von mindestens einer als Federmittel 60 zwischen dem Deckelelement 64 und der Innenbuchse 26 der zweiteiligen Lagerbuchse 24 wirkenden Druckfeder 82 beaufschlagt. Auch bei dieser Druckfeder 82 handelt es sich bevorzugt um ein aus mehreren Tellerfedem bestehendes Federpaket, um die erforderliche, recht hohe Vorspann-Federkraft F aufbringen zu können. Dabei sitzt die Druckfeder 82 in einer inneren Aufnahmevertiefung 84 des Deckelelementes 64 und wirkt insbesondere über ein scheibenförmiges Druckelement 86 auf die Lagerbuchse 24 bzw. über die bevorzugt vorhandene Druckbuchse 26a auf die Innenbuchse 26. Das Druckelement 86 kann mit Vorteil spielfrei in einer Vertiefung des Deckelelementes 64 sitzen und dabei einen im wesentlichen spielfrei in die Lagerbuchse eingreifenden Zentrieransatz 88 aufweisen. Dadurch wird bei der Montage eine selbsttätige Zentrierung des Deckelelementes 64 relativ zum Gehäuse 2 erreicht.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Klappenscheibenventil (1) für Medien unter Hochdruck und/oder Hochtemperatur, bestehend aus einem Gehäuse (2) mit einem Durchlaß (4) für das Medium und aus einer als Absperrorgan innerhalb des Durchlasses (4) angeordneten Klappenscheibe (6), die über eine zweiseitig in gehäuseseitigen Drehlagem (8) geführte und sich quer durch den Durchlaß (4) erstreckende, einseitig mit einem Betätigungsende (62) aus dem Gehäuse (2) nach außen geführte Welle (10) um eine Drehachse (X-X) derart verschwenkbar ist, daß sie in einer Öffnungsstellung mit ihrer Scheibenebene etwa entsprechend der Durchlaßrichtung verläuft und in einer quer zur Durchlaßrichtung stehenden Absperrstellung umfangsgemäß dichtend mit einem gehäuseseitigen Dichtsitz (14) zusammenwirkt, wobei jedem der beiden Drehlager (8) auf seiner dem Durchlaß (4) zugekehrten, inneren Seite (20) eine Lagervorabdichtung (22) derart vorgeordnet ist, daß ein die Welle (10) im Bereich des jeweiligen Drehlagers (8) umgebender Ringspalt über ein verpressbares Dichtelement (32) gegen ein Eindringen von Medium aus dem Durchlaß (4) abgedichtet ist,
und wobei die von dem Betätigungsende (62) der Welle (10) entfernt liegende Lagervorabdichtung (22) über Spannmittel derart axial mit einer Nachspannkraft beaufschlagbar ist, daß eine nachstellende radiale Verpressbarkeit erreicht wird,
**dadurch gekennzeichnet, daß** die Lagervorabdichtung (22) eine zweiteilige Lagerbuchse (24) mit einer die Welle (10) aufnehmenden Innenbuchse (26) und einer die Innenbuchse (26) aufnehmenden und in einer Lagerbohrung (16) des Gehäuses (2) sitzenden Außenbuchse (28) aufweist, wobei das verpressbare Dichtelement (32) auf der inneren Seite (20) des Drehlagers (8) axial zwischen der Innenbuchse (26) und einem vorspringenden Endabschnitt (30) der Außenbuchse (28) derart angeordnet ist, daß durch das axiale Verpressen der Lagerbuchse (24) das Dichtelement (32) auch radial zwischen der Außenbuchse (28) und nach innen gegen die Welle (10) verpresst wird.

2. Klappenscheibenventil nach Anspruch 1,
**dadurch gekennzeichnet, daß** auch die andere, dem Wellenbetätigungsende (62) nächstliegende Lagervorabdichtung (22) über Spannmittel zum Nachspannen beaufschlagbar ist.

3. Klappenscheibenventil nach Anspruch 1 oder 2,
**dadurch gekennzeichnet, daß** die Spannmittel durch Federmittel (60) derart gebildet sind, daß die jeweilige Lagervorabdichtung (22) in axialer Richtung permanent mit Federkraft (F) beaufschlagt ist und eine dauerhafte selbstnachstellende radiale Verpressung erreicht wird.

4. Klappenscheibenventil nach einem der Ansprüche 1 bis 3,
**dadurch gekennzeichnet, daß** das/jedes Drehlager (8) auf seiner von dem Durchlaß (4) entfernt liegenden Seite (34) ein zweites, äußeres Dichtelement (36) derart aufweist, daß dieses zweite Dichtelement (36) durch axiales Verpressen der Lagerbuchse (24) auch radial nach außen gegen die Lageröffnung (16) des Gehäuses (2) verpresst wird.

5. Klappenscheibenventil nach einem der Ansprüche 1 bis 4,
**dadurch gekennzeichnet, daß** zumindest das erste, innere Dichtelement (32) der/jeder Lagervorabdichtung (22) durch ein Dichtringpaket mit mindestens zwei verpressbaren, insbesondere aus vorgepresstem Reingraphit bestehenden Dichtringen (38) gebildet ist.

6. Klappenscheibenventil nach einem der Ansprüche 1 bist, 5
**dadurch gekennzeichnet, daß** die Welle (10) auf ihrer dem Betätigungsende (62) gegenüberliegenden Seite in einem durch ein Deckelelement (64) dicht verschlossenen Gehäuseraum endet.

7. Klappenscheibenventil nach einem der Ansprüche 1 bis 6,
**dadurch gekennzeichnet, daß** die dem Betätigungsende (62) der Welle (10) nächstliegende Lagervorabdichtung (22) über ein hülsenförmiges, die Welle (10) umschließendes Stopfbuchsenelement (70) und insbesondere über eine zusätzliche Dichtungspackung (72) sowie über die Innenbuchse (26) der Lagerbuchse (24) durch die Spannmittel beaufschlagt ist.

8. Klappenscheibenventil nach Anspruch 7,
**dadurch gekennzeichnet, daß** das Stopfbuchsenelement (70) von einem Druckkörper (74) beaufschlagt ist, der eine von der Welle (10) durchgriffene Öffnung aufweist und auf mit dem Gehäuse (2) verbundenen Stehbolzen (76) sitzt, wobei als Spann- bzw. Federmittel (60) auf den Stehbolzen (76) jeweils zwischen dem Druckkörper (74) und einem Widerlagerelement (78) mindestens ein Druckfederelement (80), insbesondere ein aus mehreren Tellerfedem bestehendes Federpaket, sitzt.

9. Klappenscheibenventil nach Anspruch 8,
**dadurch gekennzeichnet**, daßdieStehbolzen(76)als Schraubgewindebolzen und die Widerlagerelemente (78) als Schraubmuttem ausgebildet sind.

10. Klappenscheibenventil nach Anspruch 8 oder 9,
**dadurch gekennzeichnet**, daßvierStehbolzen(78)mit entsprechenden Druckfederelementen (80) und Widerlagerelementen (78) in einer kraftsymmetrischen Anordnung vorgesehen sind.

11. Klappenscheibenventil nach einem der Ansprüche 6 bis 10,
**dadurch gekennzeichnet, daß** die auf der verschlossenen Seite des Gehäuses (2) angeordnete Lagervorabdichtung (22) von mindestens einer als Spann- bzw. Federmittel (60) zwischen dem Deckelelement (64) und der Innenbuchse (26) der Lagerbuchse (24) wirkenden Druckfeder (82), insbesondere von einem aus mehreren Tellerfedern bestehenden Federpaket, beaufschlagt ist.

12. Klappenscheibenventil nach Anspruch 11,
**dadurch gekennzeichnet, daß** die Druckfeder (82) in einer inneren Aufnahmevertiefung (84) des Deckelelementes (64) sitzt und insbesondere über ein scheibenförmiges Druckelement (86) auf die Lagerbuchse (24) wirkt.

13. Klappenscheibenventil nach einem der Ansprüche 1 bis 12,
**dadurch gekennzeichnet, daß** die Dichtzone (12) der Klappenscheibe (6) von einem Dichtungsring (42) gebildet ist, der zwischen einer Basisscheibe (44) der Klappenscheibe (6) und einem scheiben- oder ringscheibenförmigen Klemmelement (46) eingespannt gehalten ist.

14. Klappenscheibenventil nach Anspruch 13,
**dadurch gekennzeichnet, daß** der Dichtungsring (42) als Lamellendichtung aus paketartig aufeinanderliegenden Einzelscheiben (42a,b) aus Stahl besteht.

15. Klappenscheibenventil nach Anspruchs 14,
**dadurch gekennzeichnet, daß** die Einzelscheiben (42a,b) im inneren Umfangsbereich des Dichtungsrings (42) an vorzugsweise mindestens drei Verbindungsstellen (50) stoffschlüssig miteinander verbunden, insbesondere verschweißt sind.

16. Klappenscheibenventil nach Anspruch 14,
**dadurch gekennzeichnet, daß** die Einzelscheiben (42a,b) in ihrem Ringflächenbereich miteinander verstiftet bzw. vernietet sind

17. Klappenscheibenventil nach einem der Ansprüche 14 bis 16,
**dadurch gekennzeichnet, daß** die auf einer Seite, insbesondere einer Druckseite, angeordnete erste Einzelscheibe (42b) der Lamellendichtung (42) eine Dicke (D₁) aufweist, die größer als die Dicke (D₂) der übrigen Einzelscheiben (42a) ist.

## Claims

1. Butterfly valve (1) for media under high pressure and/or at high temperature, consisting of a housing (2) with a passage (4) for the medium and of a butterfly (6) arranged as a shut-off member within the passage (4) and, via a shaft (10) guided at both ends in pivot bearings (8) on the housing, extending transversely through the passage (4) and guided on one side by an actuating end (62) out of the housing (2) to the exterior, pivotable about an axis (X-X) of rotation in such a way that, in an opened position, its disc plane extends approximately in the direction of the passage and in a closed position, lying transversely to the passage direction, it interacts with a sealing seat (14) on the housing to form a circumferential seal, an advance bearing seal (22) being arranged in front of each of the two pivot bearings (8) on its inner side (20) facing the passage (4) in such a way that an annular gap surrounding the shaft (10) in the region of the respective pivot bearing (8) is sealed off against penetration of medium from the passage (4) by means of a compressible sealing element (32),
it being possible for the advance bearing seal (22) lying remote from the actuating end (62) of the shaft (10) to be axially subjected via tensioning means to the effect of a retensioning force such that a subsequent radial compressibility is achieved **characterized in that** the advance bearing seal (22) has a two-part bearing bush (24) with an inner bush (26) receiving the shaft (10) and an outer bush (28) receiving the inner bush (26) and seated in a bearing hole (16) in the housing (2), the compressible sealing element (32) being arranged on the inner side (20) of the pivot bearing (8), axially between the inner bush (26) and a projecting end section (30) of the outer bush (28), so that, as a result of the axial compression of the bearing bush (24), the sealing element (32) is also radially compressed between the outer bush (28) and inwardly compressed against the shaft (10).

2. Butterfly valve according to Claim 1,
**characterized in that** the other advance bearing seal (22) lying closer to the shaft actuating end (62) can also be acted upon via tensioning means for retensioning.

3. Butterfly valve according to Claim 1 or 2,
**characterized in that** the tensioning means are formed by a spring means (60) in such a way that the respective advance bearing seal (22) is permanently subjected to the action of a spring force (F) in the axial direction and a continuous self-adjusting radial compression is achieved.

4. Butterfly valve according to one of Claims 1 to 3,
**characterized in that** the/each pivot bearing (8) has, on its side (34) remote from the passage (4), a second, external sealing element (36), so that this second sealing element (36), by axial compression of the bearing bush (24), is also radially compressed outward against the bearing aperture (16) in the housing (2).

5. Butterfly valve according to one of Claims 1 to 4,
**characterized in that** at least the first, inner sealing element (32) of the/each advance bearing seal (22) is formed by a gasket pack with at least two compressible gaskets (38) consisting, in particular, of pre-pressed pure graphite.

6. Butterfly valve according to one of Claims 1 to 5,
**characterized in that** the shaft (10) ends, on its side opposite the actuating end (62), in a housing space sealingly closed by a lid element (64).

7. Butterfly valve according to one of Claims 1 to 6,
**characterized in that** the advance bearing seal (22) lying closer to the actuating end (62) of the shaft (10) is subjected to the action of the tensioning means via a sleeve-shaped stuffing box element (70) enclosing the shaft (10) and, in particular, via an additional seal packing (72) and via the inner bush (26) of the bearing bush (24).

8. Butterfly valve according to Claim 7,
**characterized in that** the stuffing box element (70) is subjected to the action of a pressure member (74) which has an aperture through which the shaft (10) engages and is seated on the stud bolt (76) connected to the housing (2), at least one compression spring element (80), especially a spring assembly consisting of a plurality of disc springs, being seated on the stud bolt (76), in each case between the pressure member (74) and an abutment element (78), as a tensioning or spring means (60).

9. Butterfly valve according to Claim 8,
**characterized in that** the stud bolts (76) are designed as threaded bolts and the abutment elements (78) as threaded nuts.

10. Butterfly valve according to Claim 8 or 9,
**characterized in that** four stud bolts (78) are provided, with corresponding compression spring elements (80) and abutment elements (78), in a force-symmetrical arrangement.

11. Butterfly valve according to one of Claims 6 to 10,
**characterized in that** the advance bearing seal (22) arranged on the closed side of the housing (2) is subjected to the action of at least one compression spring (82), especially a spring assembly consisting of a plurality of disc springs, acting as a tensioning or spring means (60) between the lid element (64) and the inner bush (26) of the bearing bush (24).

12. Butterfly valve according to Claim 11,
**characterized in that** the compression spring (82) is seated in an inner receiving recess (84) of the lid element (64) and, in particular, acts on the bearing bush (24) via a discoid pressure element (86).

13. Butterfly valve according to one of Claims 1 to 12,
**characterized in that** the sealing zone (12) of the butterfly (6) is formed by a sealing ring (42), which is held by clamping between a base disc (44) of the butterfly (6) and a discoid or annular disc-shaped clamping element (46).

14. Butterfly valve according to Claim 13,
**characterized in that** the sealing ring (42) consists, as a segment seal, of individual steel discs (42a,b) placed one above the other as a pack.

15. Butterfly valve according to Claim 14,
**characterized in that** the individual discs (42a,b) are connected to each other by bonding, especially by welding, in the inner circumferential region of the sealing ring (42) at, preferably, at least three connection points (50).

16. Butterfly valve according to Claim 14,
**characterized in that** the individual discs (42a,b) are pinned or riveted together in their annular surface region.

17. Butterfly valve according to one of Claims 14 to 16,
**characterized in that** the first individual disc (42b) of the segment seal (42), arranged on one side, especially a pressure side, has a thickness (D₁) which is greater than the thickness (D₂) of the other individual discs (42a).

## Revendications

1. Robinet à papillon (1) pour des agents sous haute pression et/ou sous haute température, constituée d'un boîtier (2) avec un passage (4) pour l'agent et d'un papillon (6) disposé en tant qu'organe de fermeture à l'intérieur du passage (4), qui par l'intermédiaire d'un arbre (10) guidé des deux côtés dans des coussinets de pivotement (8) et s'étendant à la transversale du passage (4), guidé sur un côté, vers l'extérieur hors du boîtier (2) par une extrémité de manoeuvre (62), est pivotant autour d'un axe rotatif (X - X), de façon à ce que dans une position d'ouverture, le plan de son disque s'étende de façon correspondant environ à la direction de passage et dans une position de fermeture située à la transversale de la direction de passage, il soit en interaction d'étanchéité périphérique avec un logement d'étanchéité (14) situé côté boîtier, une étanchéité préliminaire de palier (22) étant située en amont de chacun des deux coussinets de pivotement, sur leur face interne (20) dirigée vers le passage (4), de façon à ce qu'une fente annulaire entourant l'arbre (10) dans la zone du coussinet de pivotement respectif (8) soit étanchéifiée par l'intermédiaire d'un élément d'étanchéité compressible (32) contre une pénétration de l'agent à partir du passage (4),
et l'étanchéité préliminaire de palier (22) située à distance de l'extrémité de manoeuvre (62) de l'arbre (10) pouvant être soumise de façon axiale à un rattrapage par l'intermédiaire de moyens de tension, de façon à obtenir une compressibilité radiale de rattrapage,
**caractérisée en ce que** l'étanchéité préliminaire de palier (22) est munie d'un douille de palier en deux parties (24), avec une douille interne (26) réceptionnant l'arbre (10) et une douille externe (28) logée dans un alésage du roulement (16) du boîtier (2), l'élément compressible (32) étant disposé sur le côté interne (20) du coussinet de pivotement (8) de façon axiale entre la douille interne (26) et une section d'extrémité (30) de la douille externe (28), de façon à ce que par une compression axiale de la douille de palier (24), l'élément d'étanchéité (32) soit également comprimé de façon radiale entre la douille externe (28) et vers l'intérieur contre l'arbre (10).

2. Robinet à papillon selon la revendication 1,
**caractérisée en ce que** l'autre étanchéité préliminaire de palier (22) qui est la plus proche de l'extrémité de manoeuvre de l'arbre (62) peut aussi être soumise à des moyens de tension pour le rattrapage.

3. Robinet à papillon selon la revendication 1 ou 2,
**caractérisée en ce que** les moyens de tension sont formés par des moyens à ressort (60) de façon telle, que l'étanchéité préliminaire de palier (22) est soumise de façon permanente à une force élastique (F) en direction axiale et qu'une compression radiale de rattrapage durable est obtenue.

4. Robinet à papillon selon l'une quelconque des revendications 1 à 3,
**caractérisée en ce que**, sur sa face éloignée (34) du passage (4), le/chaque coussinet de pivotement (8) est muni d'un second élément d'étanchéité qui est externe (36), de façon à ce que ce second élément d'étanchéité (36) soit également comprimé contre l'ouverture de roulement (16) du boîtier (2), par compression axiale de la douille de palier (24).

5. Robinet à papillon selon l'une quelconque des revendications 1 à 4,
**caractérisée en ce qu'**au moins le premier élément d'étanchéité interne (32) de la / de chaque étanchéité préliminaire de palier (22) est formé d'un paquet de bagues d'étanchéité avec au moins deux bagues d'étanchéité (38) compressibles, constituées notamment de graphite pur précomprimé.

6. Robinet à papillon selon l'une quelconque des revendications 1 à 5,
**caractérisée en ce que** sur son côté opposé à l'extrémité de manoeuvre (62), l'arbre (10) se termine dans un compartiment du boîtier fermé de façon étanche par un élément de recouvrement (64).

7. Robinet à papillon selon l'une quelconque des revendications 1 à 6,
**caractérisée en ce que** l'étanchéité préliminaire de palier (22) la plus proche de l'extrémité de manoeuvre (62) de l'arbre (10) est soumise aux moyens de tension par l'intermédiaire d'un élément de presse-étoupe (70) en forme de douille, entourant l'arbre (10) et notamment par l'intermédiaire d'un paquet d'étanchéités supplémentaire (72), ainsi que par l'intermédiaire de la douille interne (26) de la douille de palier (24).

8. Robinet à papillon selon la revendication 7,
**caractérisée en ce que** l'élément de presse-étoupe (70) est soumis à un corps de pression (74), qui est muni d'un orifice traversé par l'arbre (10) et qui est logé sur le boîtier (2) avec des boulons d'entretoisement (76), au moins un élément à ressort de pression (80), notamment un paquet de ressort constitué de plusieurs ressorts à disque étant logé en tant que moyen de serrage ou en tant que moyen à ressort (60) sur les boulons d'entretoisement (76), respectivement entre le corps de pression (74) et un élément de butée (78).

9. Robinet à papillon selon la revendication 8,
**caractérisée en ce que** les boulons d'entretoisement (76) sont conçus en tant que boulons filetés et **en ce que** les éléments de butée (78) sont conçus en tant qu'écrous.

10. Robinet à papillon selon la revendication 8 ou 9,
**caractérisée en ce que** quatre boulons d'entretoisement (76) avec les éléments de ressort de pression (80) et les éléments de butée (78) correspondants sont prévus selon un dispositif à forces symétriques.

11. Robinet à papillon selon l'une quelconque des revendications 6 à 10,
**caractérisée en ce que** les étanchéités préliminaires de palier (22) disposées sur le côté fermé du boîtier (2) sont soumis à au moins un ressort de pression (82) agissant en tant que moyen de serrage ou en tant que moyen à ressort (60) entre l'élément de recouvrement (64) et la douille interne (26) de la douille de palier (24), notamment à un paquet de ressorts constitué d'un ou de plusieurs ressorts à disque.

12. Robinet à papillon selon la revendication 11,
**caractérisée en ce que** le ressort de pression (82) est logé dans un creux de réception interne (84) de l'élément de recouvrement (64) et agit notamment sur la douille de palier (24) par l'intermédiaire d'un élément de pression (86) notamment en forme de disque.

13. Robinet à papillon selon l'une quelconque des revendications 1 à 12,
**caractérisée en ce que** la zone d'étanchéité (12) du papillon (6) est formée par une bague d'étanchéité (42) qui est maintenue serrée entre un disque de base (44) du papillon (6) et un élément de serrage (46) en forme de disque ou en forme de disque annulaire.

14. Robinet à papillon selon la revendication 13,
**caractérisée en ce qu'**en tant qu'étanchéité à lamelles, la bague d'étanchéité (42) est constituée de disques individuels (42a, b) en acier, superposés en paquet.

15. Robinet à papillon selon la revendication 14,
**caractérisée en ce que** dans la zone périphérique interne de la bague d'étanchéité (42), les disques individuels (42a, b) sont reliés entre eux par complémentarité de matière, notamment soudés de préférence en aux moins trois points de liaison (50).

16. Robinet à papillon selon la revendication 14,
**caractérisée en ce que** dans leur zone de surface annulaire, les disques individuels (42a, b) sont goupillés ou rivés entre eux.

17. Robinet à papillon selon l'une quelconque des revendications 14 à 16,
**caractérisée en ce que** le premier disque individuel (42b) de l'étanchéité à lamelles, qui est disposé sur un côté, notamment un côté pression présente une épaisseur (D₁) qui est supérieure à l'épaisseur (D₂) des autres disques individuels (42a)
